# EUROPÄISCHE PATENTSCHRIFT

(11) **EP 3 744 663 B1**
(45) Veröffentlichungstag und Bekanntmachung des Hinweises auf die Patenterteilung: **26.07.2023**
(21) Anmeldenummer: 20176910.6
(22) Anmeldetag: 27.05.2020
(51) Int. Cl.: B65G 13/11, B65G 21/10, B65G 39/02, B65G 47/88, B65G 47/14, B65G 1/08

(54) **ZU- UND ABFÜHRVORRICHTUNG, ABFÜHREINHEIT UND VERFAHREN ZUM ZUFÜHREN VON ZU BEARBEITENDEN WERKSTÜCKEN IN EINER WERKZEUGMASCHINE UND ZUM ABFÜHREN VON IN DER WERKZEUGMASCHINE BEARBEITETEN WERKSTÜCKEN VON DER WERKZEUGMASCHINE**
FEED AND DISCHARGE DEVICE, DISCHARGE UNIT AND METHOD FOR FEEDING WORKPIECES TO BE MACHINED IN A MACHINE TOOL AND FOR REMOVING WORKPIECES MACHINED IN THE MACHINE TOOL
DISPOSITIF D'ALIMENTATION ET D'ÉVACUATION, UNITÉ D'ÉVACUATION ET PROCÉDÉ D'ALIMENTATION EN PIÈCES À USINER DANS UNE MACHINE-OUTIL ET D'ÉVACUATION DES PIÈCES USINÉES DANS LA MACHINE-OUTIL DE LA MACHINE-OUTIL

(30) Priorität: 27.05.2019 DE 102019114122
(43) Veröffentlichungstag der Anmeldung: 02.12.2020
(73) Patentinhaber: Grimm AG, 78559 Gosheim (DE)
(72) Erfinder: ZIRN, Leo, 78585 Bubsheim (DE); FRITZ, Rüdiger, 78532 Tuttlingen (DE)
(74) Vertreter: Westphal, Mussgnug & Partner Patentanwälte mbB

(56) Entgegenhaltungen:
- WO-A1-2018/197384
- DE-A1-102015 002 203
- JP-A- H09 136 715
- JP-A- 2014 201 426
- JP-U- H0 446 016
- KR-A- 20090 077 223
- US-A1- 2010 300 840

## Beschreibung

Die vorliegende Erfindung betrifft eine Zu- und Abführvorrichtung und ein Verfahren zum Zuführen von zu bearbeitenden Werkstücken zu einer Werkzeugmaschine und zum Abführen von in der Werkzeugmaschine bearbeiteten Werkstücken von der Werkzeugmaschine.

Insbesondere dann, wenn es sich bei den zu bearbeitenden Werkstücken um Massenprodukte handelt, ist häufig nicht die eigentliche Bearbeitung der Werkstücke in der betreffenden Werkzeugmaschine der geschwindigkeitsbestimmende Schritt, sondern die Zufuhr und die Abfuhr der Werkstücke zur bzw. von der Werkzeugmaschine. Die Werkstücke werden häufig ungeordnet in Gebinden oder Körben angeliefert, müssen aber in einer bestimmten Ausrichtung der betreffenden Werkzeugmaschine zugeführt werden. Nach erfolgter Bearbeitung werden die bearbeiteten Werkstücke üblicherweise ebenfalls ungeordnet von der Werkzeugmaschine abgegeben. Um jedoch die bearbeiteten Werkstücke raumsparend weitertransportieren zu können, müssen diese häufig geordnet in einen Ladungsträger oder dergleichen abgelegt werden.

Sowohl beim Zuführen der zu bearbeitenden Werkstücke zur Werkzeugmaschine als auch beim Abführen der bearbeiteten Werkstücke werden diese händisch in die entsprechende Position gebracht, was ein zeitaufwendiger und teurer Schritt ist. Um diesen Schritt zu automatisieren, sind verschiedene Vorrichtungen vorgeschlagen worden, die beispielsweise in der DE 196 16 708 A1, DE 38 32 407 A, der JP 2014/201426 A, der WO 2018/197384 A1, der KR 2009/0077223 A, der JP H04 46016 U, der DE 10 2015 002 203 A1 und der DE 10 42 896 A1 offenbart sind. Auch wenn die dort offenbarten Vorrichtungen das Zu- und Abführen von Werkstücken zur Werkzeugmaschine bzw. von der Werkzeugmaschine weg vereinfachen, eignen sich die dort offenbarten Vorrichtungen nicht zum Bearbeiten von Massenprodukten. Zudem benötigen die dort gezeigten Vorrichtungen eine vergleichsweise große Fläche, so dass sie nicht überall in einer Werkhalle aufgestellt werden können. H09 136715 A offenbart eine Zu- und Abführvorrichtung nach dem Oberbegriff des Anspruchs 1 sowie eine Abführeinheit nach dem Oberbegriff des Anspruchs 15.

Aufgabe einer Ausführungsform der vorliegenden Erfindung ist es daher, eine Zu- und Abführvorrichtung zum Zuführen von zu bearbeitenden Werkstücken zu einer Werkzeugmaschine und zum Abführen von in der Werkzeugmaschine bearbeiteten Werkstücken von der Werkzeugmaschine vorzuschlagen, mit welchem es mit einfachen und raumsparenden Mitteln möglich ist, Werkstücke, insbesondere als Massenprodukte ausgestaltete Werkstücke, zuverlässig und weitgehend automatisiert einer Werkzeugmaschine zuzuführen und nach erfolgter Bearbeitung die Werkstücke wieder aus der Werkzeugmaschine abzuführen.

Des Weiteren liegt einer Ausgestaltung der vorliegenden Erfindung die Aufgabe zugrunde, ein Verfahren zum Betreiben einer derartigen Zu- und Abführvorrichtung zu schaffen.

Diese Aufgabe wird mit den in den Ansprüchen 1, 15 und 16 angegebenen Merkmalen gelöst. Vorteilhafte Ausführungsformen sind Gegenstand der Unteransprüche.

Eine Ausführungsform der Erfindung betrifft eine Zu- und Abführvorrichtung zum Zuführen von zu bearbeitenden Werkstücken zu einer Werkzeugmaschine und zum Abführen von in der Werkzeugmaschine bearbeiteten Werkstücken von der Werkzeugmaschine nach Anspruch 1, umfassend
- eine Zuführ-Fördereinrichtung, mit welcher die zu bearbeitenden Werkstücke zu der Werkzeugmaschine gefördert werden können, und
- eine Abführeinheit mit einer Transportbahn zum Bewegen der bearbeiteten Werkstücke oder zum Bewegen von Ladungsträgern, in welche die bearbeiteten Werkstücke einbringbar sind, wobei die Transportbahn
   o einen Übergabeabschnitt, in welchem die bearbeiteten Werkstücke auf die Transportbahn auflegbar oder in zumindest einen Ladungsträger einbringbar sind und
   o einen Abtransportabschnitt aufweist, mit welchem die bearbeiteten Werkstücke oder die beladenen Ladungsträger vom Übergabeabschnitt weg bewegt werden können, wobei
   oder Übergabeabschnitt mit einer Hubeinrichtung zwischen einer ersten Stellung, in welcher der Übergabeabschnitt zur Übergabe der bearbeiteten Werkstücke ausgerichtet ist, und einer zweiten Stellung bewegbar ist, in welcher der Übergabeabschnitt zum Beschleunigen und zum Bewegen der bearbeiteten Werkstücke oder der beladenen Ladungsträger zum Abtransportabschnitt hin gegenüber der Horizontalen geneigt ist.

Ein wesentlicher Aspekt der vorliegenden Zu- und Abführvorrichtung liegt darin, dass der Übergabeabschnitt mit einer Hubeinrichtung zwischen einer ersten Stellung und einer zweiten Stellung bewegbar ist. In der ersten Stellung ist der Übergabeabschnitt so ausgerichtet, dass ein Werkstück besonders einfach auf den Übergabeabschnitt abgelegt oder in einen Ladungsträger eingebracht werden kann. Unter einer Hubeinrichtung soll jede Einrichtung verstanden werden, die in der Lage ist, den Übergabeabschnitt zwischen der ersten und der zweiten Stellung zu bewegen. Für den Fall, dass ein Werkstück direkt auf den Übergabeabschnitt abgelegt werden soll, bietet es sich im Allgemeinen an, den Übergabeabschnitt im Wesentlichen horizontal auszurichten. Für den Fall, dass ein Ladungsträger beladen werden soll, kann es sich anbieten, den Übergabeabschnitt in der ersten Stellung etwas zu neigen, so dass der Ladungsträger an einer Wandung oder dergleichen anliegt. Hierdurch kann eine definierte Übergabestellung des Ladungsträgers im Übergabeabschnitt geschaffen werden, in welcher er aufgrund der Neigung des Übergabeabschnitts verbleibt, solange sich der Übergabeabschnitt in der ersten Stellung befindet.

Sobald das Werkstück auf den Übergabeabschnitt abgelegt worden oder der Ladungsträger beladen ist, wird der Übergabeabschnitt in die zweite Stellung überführt, in welcher er gegenüber der Horizontalen geneigt ist. Die Neigung wird so gewählt, dass der Ladungsträger oder das Werkstück vom Übergabeabschnitt weg und zum Abtransportabschnitt hin bewegt wird. Die Verwendung einer Hubeinrichtung ermöglicht es mit vergleichsweise einfachen Mitteln, das betreffende Werkstück oder den betreffenden Ladungsträger zur gewünschten Zeit vom Übergabeabschnitt weg und zum Abtransportabschnitt hin zu bewegen. Insbesondere ist es nicht notwendig, den Übergabeabschnitt mit angetriebenen Rollen oder dergleichen auszurüsten, so dass der konstruktive Aufwand gering gehalten werden kann.

Erfindungsgemäß weist der Übergabeabschnitt eine Kugelbahn auf und ist so gelagert, dass beim Bewegen in die zweite Stellung der Ladungsträger oder die bearbeiteten Werkstücke eine Drehbewegung um die Vertikalachse ausführen. In dieser Ausführungsform ist der Übergabeabschnitt nach Art eines Kugelrollentisches ausgebildet. Sobald der Übergabeabschnitt in die zweite Stellung bewegt worden ist, rollt der Ladungsträger vom Übergabeabschnitt herunter zum Abtransportabschnitt hin. Die hierzu notwendige Neigung ist aufgrund der Kugelbahn vergleichsweise gering, so dass der Hub, der mit der Hubeinrichtung überwunden werden muss, um den Übergabeabschnitt von der ersten Stellung in die zweite Stellung und zurück zu bewegen, vergleichsweise gering ist. Die hierzu benötigte Zeit ist daher ebenfalls gering.

Üblicherweise weisen die Ladungsträger eine im Wesentlichen rechteckige Grundfläche auf. Aufgrund der Möglichkeit, den Ladungsträger um die Vertikalachse drehen zu können, wenn der Ladungsträger von dem Übergabeabschnitt herunterrollt, genügt es, die Breite des Abtransportabschnitts so zu wählen, dass sie in etwa der Breite der Schmalseite des Ladungsträgers entspricht. Hierdurch lässt sich die vorschlagsgemäße Zu- und Abführvorrichtung besonders raumsparend ausführen.

Erfindungsgemäß weist die Abführeinheit eine Übergabeabschnitt-Führungseinheit auf, die so mit dem Übergabeabschnitt zusammenwirkt, dass der Übergabeabschnitt beim Bewegen von der ersten Stellung in die zweite Stellung zunächst um eine erste Drehachse und anschließend um eine zweite Drehachse gedreht wird. Hierzu kann die Übergabeabschnitt-Führungseinheit einen oder mehrere Anschläge oder eine Kulissenführung oder dergleichen aufweisen. Die Drehung um die erste Drehachse dient hauptsächlich dazu, die Ladungsträger zu beschleunigen, während die Drehung um die zweite Drehachse hauptsächlich dazu dient, die beschleunigten oder beschleunigenden Ladungsträger zum Abtransportabschnitt hin zu lenken. Die Ladungsträger erhalten somit eine Dynamik, die es ermöglicht, die Ladungsträger besonders zuverlässig und schnell zum Abtransportabschnitt hin zu bewegen.

Nach Maßgabe einer weiteren Ausführungsform ist der Übergabeabschnitt mittels eines Kugelgelenks gelagert. Die Verwendung eines Kugelgelenks ermöglicht es, den Übergabeabschnitt beliebig zuneigen und nicht nur um eine feste Drehachse zu drehen. Insofern ist der Übergabeabschnitt nach Art einer kardanischen Lagerung gelagert. Es ist daher möglich, den Übergabeabschnitt insbesondere in der zweiten Stellung so zu neigen, dass das Werkstück oder der Ladungsträger schräg vom Übergabeabschnitt herunterrutscht. Hierdurch ist es möglich, das Werkstück oder die Ladungsträger optimal zum Abtransportabschnitt hin zu bewegen. Hierdurch kann der Abtransportabschnitt weitgehend flexibel in Bezug zum Übergabeabschnitt angeordnet werden, ohne an der Lagerung des Übergabeabschnitts etwas ändern zu müssen. Allein der Angriffspunkt der Hubeinrichtung am Übergabeabschnitt muss an die Anordnung des Abtransportabschnitts angepasst werden.

Bei einer weitergebildeten Ausführungsform kann die Abführeinheit eine Ladungsträger-Führungseinrichtung aufweisen, die derart mit den Ladungsträgern zusammenwirkt, dass die Ladungsträger bei der Drehbewegung um 90° um die Vertikalachse gedreht werden. Es hat sich herausgestellt, dass sich die Zu- und Abführvorrichtung besonders raumsparend ausführen lässt, wenn der Ladungsträger beim Herunterrollen vom Übergabeabschnitt und beim Eintritt in den Abtransportabschnitt eine Drehung um 90° um die Vertikalachse durchführt.

Nach Maßgabe einer weiteren Ausführungsform umfasst die Hubeinrichtung eine erste Hubeinheit und eine zweite Hubeinheit umfasst, welche beabstandet voneinander am Übergabeabschnitt angreifen. Die erste Hubeinheit und die zweite Hubeinheit können entweder nacheinander und damit unabhängig voneinander oder zeitlich überlappend betätigt werden. Werden die erste Hubeinheit und die zweite Hubeinheit nacheinander betätigt, wird der Übergabeabschnitt zunächst um eine erste Drehachse und anschließen um eine zweite Drehachse gedreht. Werden die erste Hubeinheit und die zweite Hubeinheit zeitlich überlappend betätigt, kann die Drehachse kontinuierlich oder schrittweise geändert werden. Die gewünschte Bewegung des Ladungsträgers kann mit einer entsprechenden Betätigung der ersten und der zweiten Hubeinheit eingestellt werden.

Bei einer weiteren Ausführungsform kann die Abführeinheit einen Zuführabschnitt zum Zuführen der Ladungsträger zum Übergabeabschnitt aufweisen. Der Übergabeabschnitt ist üblicherweise in der Nähe oder unterhalb der Werkzeugmaschine angeordnet und nicht immer gut zugänglich. Aufgrund der Verwendung des Zuführabschnitts lässt sich die Zu- und Abführvorrichtung besonders raumsparend ausführen, da der Übergabeabschnitt nur für die Ladungsträger, nicht aber für Mitarbeiter zugänglich sein muss.

Aufgrund der Verwendung eines Zuführabschnitts können die Ladungsträger an einer Stelle aufgegeben werden, welche gut zugänglich ist. Insofern erleichtert der Zuführabschnitt den Arbeitsablauf und kann auch die Betriebssicherheit erhöhen, da die Ladungsträger in sicherem Abstand von der Werkzeugmaschine auf den Zuführabschnitt aufgegeben werden können.

Eine weitergebildete Ausführungsform zeichnet sich dadurch aus, dass der Zuführabschnitt eine Rollenbahn umfasst und gegenüber der Horizontalen zum Übergabeabschnitt hin geneigt ist. Die Ladungsträger müssen nur auf den Zuführabschnitt abgelegt werden, die infolge der Neigung des Zuführabschnitts zum Übergabeabschnitt hin rollen. Eine Antriebsvorrichtung zum Antreiben der Rollen ist daher nicht notwendig.

Nach Maßgabe einer weiteren Ausführungsform weist die Zu- und Abführvorrichtung eine Vereinzelungseinheit zum Vereinzeln der Ladungsträger auf dem Zuführabschnitt auf. Mit der Vereinzelungseinheit kann bestimmt werden, wann sich wie viele Ladungsträger auf dem Übergabeabschnitt befinden. In den meisten Fällen wird es sich anbieten, nur einen Ladungsträger auf dem Übergabeabschnitt anzuordnen. Sobald dieser Ladungsträger vollständig beladen worden und vom Übergabeabschnitt weg bewegt worden ist, kann der nächste, unbeladene Ladungsträger von der Vereinzelungseinheit freigegeben und dem Übergabeabschnitt zugeführt werden. Diese Taktung kann mit der Vereinzelungseinheit automatisiert werden. Folglich ist es möglich, eine Vielzahl von unbeladenen Ladungsträgern zu einem Zeitpunkt auf dem Zuführabschnitt abzulegen. Die Ablage der Ladungsträger auf dem Zuführabschnitt kann daher losgelöst von der Beladung der Ladungsträger auf dem Übergabeabschnitt erfolgen, wodurch der Betrieb der Zu- und Abführvorrichtung sehr flexibel gestaltet werden kann.

Eine weitere Ausführungsform zeichnet sich dadurch aus, dass der Zuführabschnitt und der Abtransportabschnitt parallel zueinander verlaufen. In dieser Ausführungsform können der Zuführabschnitt und der Abtransportabschnitt nebeneinander angeordnet werden. Hierdurch lässt sich die zu- und Abführvorrichtung besonders raumsparend ausführen.

In einer weitergebildeten Ausführungsform kann der Abtransportabschnitt eine Rollenbahn umfassen und gegenüber der Horizontalen vom Übergabeabschnitt weg geneigt sein. Ein Ladungsträger oder ein Werkstück, welcher bzw. welches auf den Abtransportabschnitt aufgelegt wird, bewegt sich aufgrund der Neigung des Abtransportabschnitts vom Übergabeabschnitt weg.

Folglich ist es nicht notwendig, eine Antriebseinrichtung, beispielsweise zum Antreiben der Rollen, vorzusehen, um das Werkstück oder den Ladungsträger entlang des Abtransportabschnitts zu bewegen. Der apparative Aufwand und die Ausfallwahrscheinlichkeit werden hierdurch gering gehalten.

Bei einer weitergebildeten Ausführungsform kann die Zu- und Abführvorrichtung eine Greifeinrichtung zum Entnehmen der zu bearbeitenden Werkstücke von der Zuführ-Fördereinrichtung, zum Zuführen der Zuführ-Fördereinrichtung entnommenen zu bearbeitenden Werkstücke zur Werkzeugmaschine und zum Zuführen der in der Werkzeugmaschine bearbeiteten Werkstücke zum Übergabeabschnitt aufweisen. Je nachdem, wie die Werkzeugmaschine ausgestaltet ist, muss das Werkstück in einer bestimmten Ausrichtung relativ zur Werkzeugmaschine, beispielsweise relativ zu einer Spindel, ausgerichtet werden. Mithilfe der Greifeinrichtung können die Entnahme eines zu bearbeitenden Werkstücks von der Zuführ-Fördereinrichtung und die Zufuhr in die Werkzeugmaschine automatisiert werden, wodurch die betreffende Bearbeitung des Werkstücks deutlich kostengünstiger gestaltet werden kann.

Eine weitere Ausführungsform sieht vor, dass die Greifeinrichtung derart eingerichtet ist, dass sie die in der Werkzeugmaschine bearbeiteten Werkstücke einer Nachbehandlungseinrichtung zuführt und nach erfolgter Nachbehandlung die nachbehandelten Werkstücke dem Übergabeabschnitt zuführt. Insbesondere dann, wenn das Werkstück spanend oder schleifend bearbeitet worden ist, kann es nicht direkt weitertransportiert werden. In diesem Fall muss zumindest ein Reinigungsvorgang vorgenommen werden, um die Späne oder die Schleifrückstände zu entfernen. Für einige Anwendungen muss sichergestellt sein, dass eine maximale Anzahl von Fremdpartikeln nicht überschritten wird. Die Nachbehandlungseinrichtung kann daher auch eine Prüfeinheit umfassen, welche prüft, ob die Fremdpartikel im gewünschten Umfang entfernt worden sind. Die Prüfeinheit kann die Werkstücke auch auf weitere Merkmale hin untersuchen, wie Risse oder Beschädigungen.

Darüber hinaus müssen einige Werkstücke verpackt werden, beispielsweise in Blisterverpackungen. Folglich kann die Nachbearbeitungseinrichtung auch eine Verpackungsmaschine umfassen, welche die Werkstücke wie gewünscht verpackt. Andere Nachbehandlungen wie Wiegen und dergleichen können ebenfalls in der Nachbehandlungseinheit durchgeführt werden.

Bei einer weiteren Ausführungsform kann die ZuführFördereinrichtung ein Bunkerband, auf welches die zu bearbeitenden Werkstücke aufgelegt werden, und ein Entnahmeband, von dem die zu bearbeitenden Werkstücke entnommen werden, umfassen. Das Bunkerband und das Entnahmeband sind dabei so angeordnet, dass ein auf das Bunkerband aufgelegtes Werkstück an das Entnahmeband übergeben werden kann. Die Anzahl der übergebenen Werkstücke kann aufgrund von unterschiedlichen Fördergeschwindigkeiten gesteuert werden. Wie eingangs erwähnt, betrifft die vorliegende Zu- und Abführvorrichtung insbesondere Werkstücke, welche als Massenartikel ausgeführt sind. Diese können ungeordnet auf das Bunkerband aufgelegt und insbesondere auf das Bunkerband geschüttet werden. Das Bunkerband wird anschließend mit einer vergleichsweise langsamen Geschwindigkeit und das Entnahmeband mit einer schnelleren Geschwindigkeit bewegt, wodurch die Anzahl der sich auf dem Entnahmeband befindlichen Werkstücke deutlich geringer ist als die Anzahl der auf dem Bunkerband angeordneten Werkstücke. Hierdurch wird die Entnahme der Werkstücke vom Entnahmeband mittels der Greifeinrichtung deutlich vereinfacht, da insbesondere eine Anhäufung von Werkstücken auf dem Entnahmeband vermieden werden kann.

Eine weitergebildete Ausführungsform zeichnet sich dadurch aus, dass die Zu- und Abführvorrichtung eine Bildverarbeitungseinrichtung aufweist, mit welcher die auf dem Entnahmeband angeordneten zu bearbeitenden Werkstücke hinsichtlich ihrer Position und Ausrichtung erfassbar sind. Die Information hinsichtlich der Position und der Ausrichtung der sich auf dem Entnahmeband befindlichen Werkstücke kann an die Greifeinrichtung weitergegeben werden, welche dann zielgerichtet ein bestimmtes Werkstück vom Entnahmeband entnehmen kann. Die Entnahme wird hierdurch sehr zuverlässig, so dass Fehler bei der Entnahme weitgehend vermieden werden können.

Nach Maßgabe einer weiteren Ausführungsform weist die Zuführ-Fördereinrichtung eine Anschlagfläche auf, gegen welche die auf dem Entnahmeband angeordneten zu bearbeitenden Werkstücke anschlagen. In dieser Ausführungsform kann das Entnahmeband soweit bewegt werden, bis dass einige Werkstücke die Anschlagfläche berühren, wodurch eine gewisse Ausrichtung der Werkstücke auf dem Entnahmeband erreicht wird. Das Entnahmeband kann anschließend um ein gewisses Maß zurückgefahren werden. Hierdurch kann ausgeschlossen werden, dass sich Werkstücke außerhalb des Erfassungsbereichs der Bildverarbeitungseinrichtung befinden und daher nicht oder nur unzureichend erfasst werden. Je nachdem, wie das Werkstück ausgebildet ist und auf welche Weise das Werkstück bearbeitet werden soll, kann es genügen, das bearbeitete Werkstück mit der Abführeinheit abzutransportieren und das zu bearbeitende Werkstück manuell der Werkzeugmaschine zuzuführen. Insofern betrifft die Erfindung auch die Abführeinheit nach Anspruch 15 als solche mit einer Transportbahn zum Bewegen von bearbeiteten Werkstücken oder zum Bewegen von Ladungsträgern, in welche die bearbeiteten Werkstücke einbringbar sind, wobei die Transportbahn
- einen Übergabeabschnitt, in welchem die bearbeiteten Werkstücke auf die Transportbahn auflegbar oder in zumindest einen Ladungsträger einbringbar sind und
- einen Abtransportabschnitt aufweist, mit welchem die bearbeiteten Werkstücke oder die beladenen Ladungsträger vom Übergabeabschnitt weg bewegt werden können, wobei
- der Übergabeabschnitt mit einer Hubeinrichtung zwischen einer ersten Stellung, in welcher der Übergabeabschnitt zur Übergabe der bearbeiteten Werkstücke ausgerichtet ist, und einer zweiten Stellung bewegbar ist, in welcher der Übergabeabschnitt zum Beschleunigen und zum Bewegen der bearbeiteten Werkstücke oder der beladenen Ladungsträger zum Abtransportabschnitt hin gegenüber der Horizontalen geneigt ist, und
- der Übergabeabschnitt mittels eines Kugelgelenks gelagert ist.

Die technischen Effekte und Vorteile, die sich mit dem vorschlagsgemäßen Abführeinheit erreichen lassen, entsprechen denjenigen, die für die vorliegende Zu- und Abführvorrichtung erörtert worden sind. Zusammenfassend sei darauf hingewiesen, dass sich sowohl die Zufuhr eines zu bearbeitenden Werkstücks zur betreffenden Werkzeugmaschine als auch die Abfuhr des bearbeiteten Werkstücks auf engem Raum realisieren lassen.

Eine Ausgestaltung der Erfindung betrifft das Verfahren nach Anspruch 16 zum Betreiben einer Zu- und Abführvorrichtung nach einem der zuvor erläuterten Ausführungsformen, umfassend folgende Schritte:
- Aufbringen einer Vielzahl von zu bearbeitenden Werkstücken auf das Bunkerband,
- Überführen eines Teils der auf dem Bunkerband angeordneten Werkstücke auf das Entnahmeband,
- Erfassen der auf dem Entnahmeband angeordneten Werkstücke hinsichtlich ihrer Position und Ausrichtung mit der Bildverarbeitungseinrichtung,
- Übertragen der Position und Ausrichtung der auf dem Entnahmeband angeordneten Werkstücke an die Greifeinrichtung,
- Entnehmen eines der auf dem Entnahmeband angeordneten Werkstücke mit der Greifeinrichtung und Zuführen des vom Entnahmeband entnommenen Werkstücks zur Werkzeugmaschine,
- Bearbeiten des Werkstücks in der Werkzeugmaschine,
- Auflegen des in der Werkzeugmaschine bearbeiteten Werkstücks auf die Transportbahn oder Einbringen des in der Werkzeugmaschine bearbeiteten Werkstücks in den Ladungsträger im Übergabeabschnitt mittels der Greifeinrichtung, und
- Bewegen des bearbeiteten Werkstücks oder des beladenen Ladungsträgers vom Übergabeabschnitt weg mittels des Abtransportabschnitts.

Die technischen Effekte und Vorteile, die sich mit dem vorschlagsgemäßen Verfahren erreichen lassen, entsprechen denjenigen, die für die vorliegende Zu- und Abführvorrichtung erörtert worden sind. Zusammenfassend sei darauf hingewiesen, dass sich sowohl die Zufuhr eines zu bearbeitenden Werkstücks zur betreffenden Werkzeugmaschine als auch die Abfuhr des bearbeiteten Werkstücks automatisieren lassen. Dies ist insbesondere dann vorteilhaft, wenn das betreffende Werkstück ein Massenprodukt darstellt.

Bei einer weiteren Ausbildung umfasst das Verfahren folgende Schritte:
- Bewegen des Übergabeabschnitts in eine erste Stellung, in welcher der Übergabeabschnitt zur Übergabe der bearbeiteten Werkstücke ausgerichtet ist, mittels der Hubeinrichtung,
- Auflegen des in der Werkzeugmaschine bearbeiteten Werkstücks auf die Transportbahn oder Einbringen des in der Werkzeugmaschine bearbeiteten Werkstücks in den Ladungsträger im Übergabeabschnitt mittels der Greifeinrichtung in der ersten Stellung, und
- Bewegen des Übergabeabschnitts in eine zweite Stellung mittels der Hubeinrichtung, in welcher der Übergabeabschnitt gegenüber der Horizontalen geneigt ist, so dass das bearbeitete Werkstück oder der beladene Ladungsträger beschleunigt und zum Abtransportabschnitt hin bewegt wird.

Der Übergabeabschnitt kann dann in die zweite Stellung bewegt werden, wenn der sich auf dem Übergabeabschnitt befindliche Ladungsträger beladen oder wenn das bearbeitete Werkstück auf dem Übergabeabschnitt abgelegt worden ist. Es ist nicht notwendig, eine Antriebseinrichtung beispielsweise zum Antreiben von Rollen vorzusehen, um eine entsprechende Bewegung des Werkstücks oder des Ladungsträgers erreichen zu können. Hierdurch werden einerseits die Zuverlässigkeit des Verfahrens erhöht und andererseits der konstruktive Aufwand gering gehalten.

Gemäß einer fortentwickelten Ausführung des vorliegenden Verfahrens ist vorgesehen, dass nach dem Schritt des Bearbeitens des Werkstücks in der Werkzeugmaschine das bearbeitete Werkstück mittels der Greifeinrichtung einer Nachbehandlungseinrichtung zugeführt und nach erfolgter Nachbehandlung die nachbehandelten Werkstücke dem Übergabeabschnitt zugeführt werden. Wie erwähnt, können einige Werkstücke nicht direkt nach erfolgter Bearbeitung in die Ladungsträger abgelegt und von dort weitertransportiert werden. Die entsprechenden Nachbehandlungsschritte können in der Nachbehandlungseinrichtung durchgeführt werden. Die Nachbehandlungsschritte können, Reinigen, Prüfen, Wiegen, Verpacken oder dergleichen sein.

Beispielhafte Ausführungsformen der Erfindung werden im Folgenden unter Bezugnahme auf die beigefügten Zeichnungen näher erläutert. Es zeigen
- Figur 1: eine prinzipielle Seitenansicht auf ein erstes Ausführungsbeispiel einer Zu- und Abführvorrichtung,
- Figur 2: eine isolierte Draufsicht auf ein erstes Ausführungsbeispiel einer Abführeinheit der in Figur 1 dargestellten Zu- und Abführvorrichtung,
- Figur 3: eine prinzipielle Darstellung des Übergabeabschnitts der Abführeinheit nach dem ersten Ausführungsbeispiel,
- Figur 4: eine isolierte Draufsicht auf ein zweites Ausführungsbeispiel einer Abführeinheit, und
- Figur 5: eine prinzipielle Seitenansicht auf ein zweites Ausführungsbeispiel einer Zu- und Abführvorrichtung.

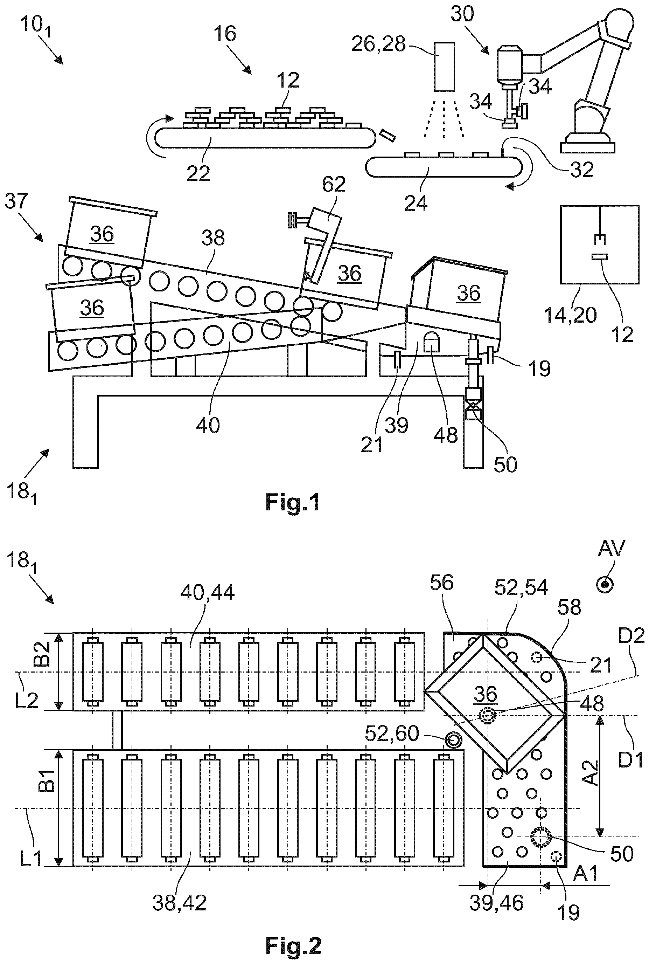

In Figur 1 ist ein Ausführungsbeispiel einer Zu- und Abführvorrichtung 10₁ zum Zuführen von zu bearbeitenden Werkstücken 12 zu einer Werkzeugmaschine 14 und zum Abführen von in der Werkzeugmaschine 14 bearbeiteten Werkstücken 12 von der Werkzeugmaschine 14 anhand einer prinzipiellen Seitenansicht dargestellt. Die Zu- und Abführvorrichtung 10₁ lässt sich in eine Zuführ-Fördereinrichtung 16 und eine Abführeinheit 18₁, hier nach einem ersten Ausführungsbeispiel, unterteilen. Die Zuführ-Fördereinrichtung 16 dient dazu, die zu bearbeitenden Werkstücke 12 einer Werkzeugmaschine 14 zuzuführen, während die Abführeinheit 18₁ dazu dient, die bearbeiteten Werkstücke 12 von der Werkzeugmaschine 14 weg zu führen. Die Abführeinheit 18₁ ist in Figur 2 anhand einer isolierten Draufsicht gezeigt.

Prinzipiell kann die erfindungsgemäße Zu- und Abführvorrichtung 10₁ zum Zu- und Abführen von Werkstücken 12 unabhängig davon verwendet werden, wie die Werkzeugmaschine 14 konkret ausgestaltet ist. Rein beispielhaft kann die Werkzeugmaschine 14 als eine Richtpresse 20 oder als eine Schleifmaschine ausgestaltet sein.

Die Zuführ-Fördereinrichtung 16 der Zu- und Abführvorrichtung 10₁ umfasst ein Bunkerband 22 und ein Entnahmeband 24. Das Entnahmeband 24 ist etwas unterhalb des Bunkerbands 22 angeordnet, wobei das Bunkerband 22 etwas über das Entnahmeband 24 hervorsteht. Die zu bearbeitenden Werkstücke 12 sind im dargestellten Ausführungsbeispiel Masseartikel, welche ungeordnet auf das Bunkerband 22 geschüttet werden können. Das Bunkerband 22 und das Entnahmeband 24 können mit unterschiedlichen Geschwindigkeiten bewegt werden, wodurch es möglich ist, die Anzahl der Werkstücke 12, welche vom Bunkerband 22 auf das Entnahmeband 24 übergeben wird, gering zu halten. Insbesondere ist es auch möglich, hierzu das Bunkerband 22 für eine gewisse Zeit zu stoppen, während das Entnahmeband 24 weiterläuft.

Die Zu- und Abführvorrichtung 10₁ umfasst eine Bildverarbeitungseinrichtung 26, mit welcher die auf dem Entnahmeband 24 angeordneten Werkstücke 12 hinsichtlich ihrer Position und Ausrichtung erfasst werden können. Die Bildverarbeitungseinrichtung 26 kann eine Kamera 28, insbesondere eine 3D-Kamera 28, umfassen, mit welcher die Werkstücke 12 erfasst werden können. Auch wenn die 3D-Kamera 28 hauptsächlich elektromagnetische Strahlung im sichtbaren Bereich erfasst, kann es insbesondere für Werkstücke 12, die eine glatte Oberfläche aufweisen und daher das Licht reflektieren, vorteilhaft sein, deren Position und Ausrichtung unter Verwendung von elektromagnetischer Strahlung im Infrarotbereich zu erfassen. Die Information bezüglich der Position und der Ausrichtung der Werkstücke 12 wird an eine Greifeinrichtung 30 übermittelt, welche hiermit in der Lage ist, ein einzelnes Werkstück 12 vom Entnahmeband 24 zu entnehmen und der Werkzeugmaschine 14 so zuzuführen, dass die Werkzeugmaschine 14 direkt mit der Bearbeitung des Werkstücks 12 beginnen kann. Die Zuführ-Fördereinrichtung 16 weist eine Anschlagfläche 32 auf, gegen welche die auf dem Entnahmeband 24 angeordneten zu bearbeitenden Werkstücke 12 anschlagen. Das Entnahmeband 24 kann soweit bewegt werden, bis dass einige Werkstücke 12 die Anschlagfläche 32 berühren, wodurch eine gewisse Ausrichtung der Werkstücke 12 auf dem Entnahmeband 24 erreicht wird. Das Entnahmeband 24 kann anschließend um ein gewisses Maß zurückgefahren werden. Hierdurch kann ausgeschlossen werden, dass sich Werkstücke 12 außerhalb des Erfassungsbereichs der Bildverarbeitungseinrichtung 26 befinden und daher nicht oder nur unzureichend erfasst werden.

Wie erwähnt, kann das Werkstück 12 beispielsweise geschliffen oder gerichtet werden. Nach erfolgter Bearbeitung wird das bearbeitete Werkstück 12 mittels der Greifeinrichtung 30 aus der Werkzeugmaschine 14 entnommen und auf die Abführeinheit 18₁ aufgelegt, mit welcher das bearbeitete Werkstück 12 weitertransportiert werden kann.

Die Greifeinrichtung 30 weist zwei Greifabschnitte 34 auf, so dass sie zwei Werkstücke 12 gleichzeitig ergreifen kann. Die Greifabschnitte 34 können beispielsweise ein Vakuum oder ein Unterdruck erzeugen, um die Werkstücke 12 festhalten zu können. Wenn die Greifeinrichtung 30 ein zu bearbeitendes Werkstück 12 von vom Entnahmeband 24 entnimmt, ist nach der Entnahme nur ein Greifabschnitt 34 belegt. Wenn die Greifeinrichtung 30 die Werkzeugmaschine 14 erreicht hat, entnimmt sie zunächst das bearbeitete Werkstück 12 mit dem freien Greifabschnitt 34 aus der Werkzeugmaschine 14 und legt danach das zu bearbeitende Werkstück 12 in der Werkzeugmaschine 14 ab. Das bearbeitete Werkstück 12 wird dann mit der Greifeinrichtung 30 zur Abführeinheit 18₁ transportiert und dort abgelegt. Hierdurch können die zurückzulegenden Wege der Greifeinrichtung 30 und folglich die benötigte Zeit gering gehalten werden.

Wie aus Figur 1 hervorgeht, können die bearbeiteten Werkstücke 12 in einen Ladungsträger 36 abgelegt werden. Um die Ladungsträger 36 entlang der Abführeinheit 18₁ bewegen zu können, weist die Abführeinheit 18₁ eine Transportbahn 37 auf. An dieser Stelle soll der Vollständigkeit halber darauf hingewiesen werden, dass es auch möglich ist, die Werkstücke 12 als solches ohne die Verwendung eines Ladungsträgers 36 entlang der Transportbahn 37 zu bewegen, allerdings ist es in den meisten Fällen zweckmäßig, die bearbeiteten Werkstücke 12 unter Verwendung eines Ladungsträgers 36 entlang der Transportbahn 37 zu bewegen. Die Transportbahn 37 umfasst einen Zuführabschnitt 38, einen Übergabeabschnitt 39 und einen Abtransportabschnitt 40. Wie insbesondere aus der Figur 2 hervorgeht, sind der Zuführabschnitt 38 und der Abtransportabschnitt 40 parallel zueinander angeordnet, was sich insbesondere am parallelen Verlauf ihrer Längsachsen L1 und L2 erkennen lässt. Der Zuführabschnitt 38 weist eine Rollenbahn 42 und der Abtransportabschnitt 40 weist eine Rollenbahn 44 auf. Der Übergabeabschnitt 39 ist als eine Kugelbahn 46 nach Art eines Kugelrollentischs ausgestaltet. Wie aus Figur 1 hervorgeht, ist der Zuführabschnitt 38 zum Übergabeabschnitt 39 hin geneigt, während der Abtransportabschnitt 40 von dem Übergabeabschnitt 39 weg geneigt ist. Aufgrund der Neigung des Zuführabschnitts 38 zum Übergabeabschnitt 39 hin rollt ein Ladungsträger 36 zum Übergabeabschnitt 39 hin. Aufgrund der Neigung des Abtransportabschnitts 40 vom Übergabeabschnitt 39 weg rollt der Ladungsträger 36 vom Übergabeabschnitt 39 weg, sobald er den Abtransportabschnitt 40 erreicht hat, worauf im Folgenden näher eingegangen werden wird.

Wie aus der Figur 1 ersichtlich, ist der Übergabeabschnitt 39 mittels eines Kugelgelenks 48 nach Art einer kardanischen Lagerung um beliebig wählbare Drehachsen drehbar gelagert. Wie ebenfalls aus der Figur 1 erkennbar, umfasst die Abführeinheit 18₁ eine Hubeinrichtung 50, die einen nicht näher dargestellten Pneumatik- oder Hydraulikzylinder, einen Stellmotor oder dergleichen umfassen kann und mit dem Übergabeabschnitt 39 zusammenwirkt. Folglich kann der Übergabeabschnitt 39 zwischen einer ersten Stellung und einer zweiten Stellung bewegt werden. Im weitesten Sinne kann die Hubeinrichtung 50 auch als eine Verstelleinrichtung aufgefasst werden, um den Übergabeabschnitt 39 zwischen der ersten Stellung und der zweiten Stellung zu bewegen. Die erste Stellung ist dabei so gewählt, dass eine Übergabe des bearbeiteten Werkstücks 12 von der Greifeinrichtung 30 in einen Ladungsträger 36 optimal erfolgen kann. Damit die Übergabe optimal erfolgen kann, muss die Position des Ladungsträgers 36 auf dem Übergabeabschnitt 39 während der Übergabe der Werkstücke 12 eindeutig definiert sein. Zudem sollte sich der Ladungsträger 36 während der Übergabe nicht unkontrolliert bewegen. Wie erwähnt, ist der Zuführabschnitt 38 zum Übergabeabschnitt 39 hin geneigt. Es bietet sich daher an, den Übergabeabschnitt 39 in der ersten Stellung so auszurichten, dass er dieselbe Neigung wie der Zuführabschnitt 38 aufweist und dass der Übergabeabschnitt 39 in der ersten Stellung mit im Zuführabschnitt 38 fluchtet. Ein Ladungsträger 36, der auf dem Zuführabschnitt 38 abgelegt wird, rollt damit weitgehend versatzfrei vom Zuführabschnitt 38 auf den Übergabeabschnitt 39. Damit der Ladungsträger 36 nicht vom Übergabeabschnitt 39 herunter rollt, weist der Übergabeabschnitt 39 eine Ladungsträger-Führungseinrichtung 52 für die Ladungsträger 36 auf, die eine Wandung 54 umfasst, gegen welche der Ladungsträger 36 anschlägt, wenn er auf den Übergabeabschnitt 39 rollt. Die Wandung 54 erstreckt sich daher entlang dem vom Zuführabschnitt 38 abgewandten Ende des Übergabeabschnitts 39. Wie erwähnt, ist der Übergabeabschnitt 39 in der ersten Stellung genauso geneigt wie der Zuführabschnitt 38. Aufgrund dieser Neigung wird der Ladungsträger 36 gegen die Wandung 54 gedrückt, so dass er während der Übergabe der bearbeiteten Werkstücke 12 eine eindeutig definierte Position einnimmt, die der Ladungsträger 36 während der Beladung mit bearbeiteten Werkstücken 12 beibehält. Damit der Übergabeabschnitt 39 reproduzierbar in die erste Stellung bewegt werden kann, umfasst die Abführeinheit 18₁ einen Anschlag 19, gegen den der Übergabeabschnitt 39 anschlägt, wenn er die erste Stellung erreicht hat.

Nach erfolgter Beladung wird der Übergabeabschnitt 39 in die zweite Stellung bewegt, wozu die Hubeinrichtung 50 den Übergabeabschnitt 39 um ein bestimmtes Maß anhebt. In diesem Fall ist der Übergabeabschnitt 39 zum Abtransportabschnitt 40 hin geneigt, so dass sich der Ladungsträger 36 über die Kugelbahn 46 zum Abtransportabschnitt 40 hin bewegt. Wie insbesondere aus der Figur 2 hervorgeht, weist der Übergabeabschnitt 39 im Gegensatz zu dem Zuführabschnitt 38 und dem Abtransportabschnitt 40 keinen rechteckigen Querschnitt auf, sondern umfasst einen zum Abtransportabschnitt 40 hin weisenden Vorsprung 56, der über eine Rundung 58 in den übrigen Übergabeabschnitt 39 übergeht. Die bereits erwähnte Wandung 54 erstreckt sich auch über die Rundung 58 in den Vorsprung 56. Die Ladungsträger-Führungseinrichtung 52 umfasst neben der Wandung 54 eine zwischen dem Zuführabschnitt 38 und dem Abtransportabschnitt 40 angeordnete Führungsrolle 60. Die Wandung 54 und die Führungsrolle 60 bewirken, dass der Ladungsträger 36 infolge der Bewegung des Übergabeabschnitts 39 in die zweite Stellung eine Drehung um die Vertikalachse AV durchführt. Im dargestellten Ausführungsbeispiel sind die Ladungsträger-Führungseinrichtung 52 und der Übergabeabschnitt 39 so ausgebildet, dass der Ladungsträger 36 eine Drehung um 90° um die Vertikalachse AV durchführt.

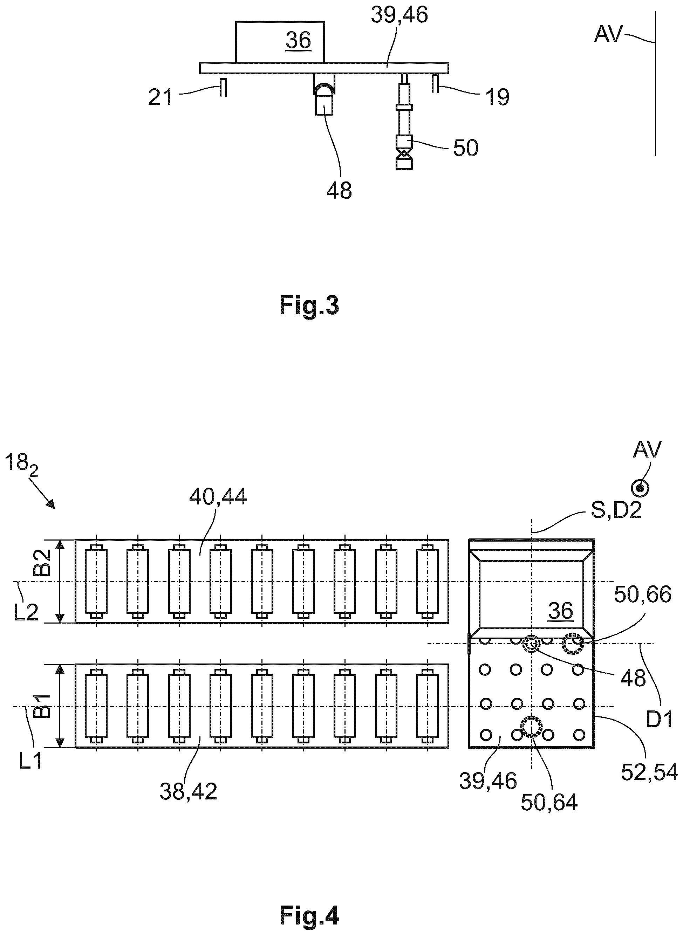

Um die Drehung des Ladungsträgers 36 um die Vertikalachse AV noch weiter zu unterstützen, weist die Abführeinheit 18₁ eine Übergabeabschnitt-Führungseinheit 21 auf, welche derart mit dem Übergabeabschnitt 39 zusammenwirkt, dass der Übergabeabschnitt 39 beim Bewegen von der ersten Stellung in die zweite Stellung zunächst um eine erste Drehachse A1 und anschließend um eine zweite Drehachse A2 gedreht wird. Im dargestellten Ausführungsbeispiel der Abführeinheit 18₁ ist die Übergabeabschnitt-Führungseinheit 21 als ein Anschlag ausgebildet. Aus Figur 3 ist die Wirkungsweise der Übergabeabschnitt-Führungseinheit 21 zu entnehmen. In der ersten Stellung, in welcher der Übergabeabschnitt 39 im Wesentlichen horizontal ausgerichtet ist, schlägt der Übergabeabschnitt 39 am Anschlag 19 an. Wird nun die Hubeinrichtung 50 aktiviert, wird der Übergabeabschnitt 39 angehoben und dreht sich dabei um die erste Drehachse D1 (siehe Figur 2). Dabei entfernt sich der Übergabeabschnitt 39 vom Anschlag 19 und nähert sich der Übergabeabschnitt-Führungseinheit 21. Ab einem bestimmten Drehwinkel kommt der Übergabeabschnitt 39 mit der Übergabeabschnitt-Führungseinheit 21 zur Anlage. Wie aus Figur 2 hervorgeht, ist der Übergabeabschnitt-Führungseinheit 21 bezogen auf die Längsachse L1 des Zuführabschnitts 38 und senkrecht hierzu beabstandet vom Kugelgelenk 48 angeordnet. Dies hat zur Folge, dass dann, wenn der Übergabeabschnitt 39 zur Anlage mit der Übergabeabschnitt-Führungseinheit 21 kommt, der Übergabeabschnitt 39 bei weiterhin aktivierter Hubeinrichtung 50 nicht mehr um die erste Drehachse D1, sondern um die zweite Drehachse D2 gedreht wird. Der Ladungsträger 36 erhält somit eine Richtungskomponente zum Abtransportabschnitt 40 hin.

Wie aus der Figur 2 erkennbar, weist der Ladungsträger 36 einen rechteckigen Querschnitt mit einer Breitseite und einer Schmalseite auf. Der Ladungsträger 36 wird so auf den Zuführabschnitt 38 abgelegt, dass seine Breitseite zum Übergabeabschnitt 39 hin zeigt. Folglich stößt der Ladungsträger 36 mit seiner Breitseite gegen die Wandung 54 des Übergabeabschnitts 39 an. In dieser Stellung wird der Ladungsträger 36 mit den Werkstücken 12 laden. Nach erfolgter Beladung und nach Bewegen des Übergabeabschnitts 39 in die zweite Stellung wird der Ladungsträger 36 so um die Vertikalachse AV gedreht, dass er nun mit der Schmalseite voraus zum Abtransportabschnitt 40 hin bewegt wird. Wie insbesondere aus der Figur 2 ersichtlich, greift die Hubeinrichtung 50 bezogen auf die Längsachse L1 des Zuführabschnitts 38 mit einem ersten Abstand A1 und senkrecht hierzu mit einem zweiten Abstand A2 zum Kugelgelenk 48 am Übergabeabschnitt 39 an. Folglich ist der Übergabeabschnitt 39 zumindest in der zweiten Stellung etwas schräg geneigt, wodurch die Drehung des Ladungsträgers 36 um die Vertikalachse AV unterstützt wird. Aufgrund der Tatsache, dass der Ladungsträger 36 auf dem Zuführabschnitt 38 mit seiner Breitseite voraus und auf dem Abtransportabschnitt 40 mit seiner Schmalseite voraus angeordnet ist, entspricht die Breite B1 des Zuführabschnitt 38 in etwa der Breite der Breitseite und die Breite B2 des Abtransportabschnitt 40 in etwa der Breite der Schmalseite Ladungsträgers 36. Mit der erfindungsgemäßen Gestaltung der Abführeinheit 18₁ lässt sich der Ladungsträger 36 innerhalb eines geringen Radius um die Vertikalachse AV bewegen. Der Zwischenraum zwischen dem Zuführabschnitt 38 und dem Abtransportabschnitt 40 lässt sich daher gering halten, so dass die vorschlagsgemäße Abführeinheit 18₁ besonders platzsparend ausgeführt werden kann.

Es bietet sich in den meisten Fällen an, nur einen Ladungsträger 36 auf dem Übergabeabschnitt 39 anzuordnen. Um eine getaktete und unterbrechungsfreie Zufuhr der Ladungsträger 36 zum Übergabeabschnitt 39 zu ermöglichen, umfasst die Zu- und Abführvorrichtung 10₁ eine Vereinzelungseinheit 62, welche die Ladungsträger 36 auf dem Zuführabschnitt 38 solange festhält, bis dass sich auf dem Übergabeabschnitt 39 kein weiterer Ladungsträger 36 mehr befindet. Anschließend gibt die Vereinzelungseinheit 62 einen Ladungsträger 36 frei, der dann selbstständig zum Übergabeabschnitt 39 hin rollt. Dieser kann dann auf die oben beschriebene Weise beladen und nach erfolgter Beladung über den Abtransportabschnitt 40 abtransportiert werden, woraufhin dieselbe Prozedur mit dem nachfolgenden, auf dem Zuführabschnitt 38 angeordneten Ladungsträger 36 durchgeführt wird.

An dieser Stelle soll erwähnt werden, dass die bearbeiteten Werkstücke 12 sortiert in den Ladungsträger 36 abgelegt werden können, so dass dieser mit einer besonders dichten Packung und somit besonders platzsparend beladen werden kann. Nachdem der Ladungsträger 36 den Abtransportabschnitt 40 entlang bewegt worden ist, kann der Ladungsträger 36 auf eine nicht gezeigte Weise weitertransportiert werden.

In Figur 4 ist ein zweites Ausführungsbeispiel der Abführeinheit 18₂ anhand einer prinzipiellen Draufsicht gezeigt. Im Gegensatz zum ersten Ausführungsbeispiel umfasst die Hubeinrichtung 50 eine erste Hubeinheit 64 und eine zweite Hubeinheit 66, die beabstandet voneinander am Übergabeabschnitt 39 angreifen. Die erste Hubeinheit 64 ist bezogen auf eine Senkrechte S zur ersten Längsachse L1 fluchtend zum Kugelgelenk 48 und die zweite Hubeinheit 66 bezogen auf eine Parallele zur ersten Längsachse L1 fluchtend zum Kugelgelenk 48 angeordnet. Der Übergabeabschnitt 39 weist einen im Wesentlichen rechteckigen Querschnitt auf.

Die erste Breite B1 des Zuführabschnitts 38 und die zweite Breite B2 des Abtransportabschnitts 40 sind gleich groß und entsprechen in etwa der Breite der Schmalseite des Ladungsträgers 36. Im Gegensatz zum ersten Ausführungsbeispiel wird im zweiten Ausführungsbeispiel der Abführeinheit 18₂ der Ladungsträger 36 mit seiner Schmalseite voraus auf den Zuführabschnitt 38 aufgegeben und schlägt folglich mit der Schmalseite an den Frontabschnitt der Wandung 54 des Übergabeabschnitts 39 an. Je nach Anordnung der Greifeinrichtung 30 kann der Ladungsträger 36 nun beladen werden. Nach erfolgter Beladung wird die erste Hubeinheit 64 aktiviert, so dass der Übergabeabschnitt 39 aus der Horizontalen um eine erste Drehachse D1 gedreht wird, die parallel zur ersten Längsachse L1 verläuft. Der Ladungsträger 36 wird nun seitlich entlang der Senkrechten S bewegt, bis dass er an den seitlichen Abschnitt der Wandung 54 anschlägt. Infolge einer entsprechenden Ansteuerung der ersten Hubeinheit 64 kann der Übergabeabschnitt 39 in die Horizontale zurückgestellt werden, was aber nicht zwingend erforderlich ist. In dieser Position kann der Ladungsträger 36 ebenfalls beladen werden, wenn die Greifeinrichtung 30 entsprechend positioniert ist. Nach erfolgter Beladung wird die zweite Hubeinheit 66 aktiviert und der Übergabeabschnitt 39 um die zweite Drehachse D2 gedreht, die senkrecht zur ersten Drehachse D1 verläuft. Der Ladungsträger 36 wird nun zum Abtransportabschnitt 40 hin bewegt.

Hieraus wird deutlich, dass der Ladungsträger 36 in diesem Ausführungsbeispiel der Abführeinheit 18₂ nicht um die Vertikalachse AV gedreht wird. Voraussetzung hierfür ist, dass die Hubeinrichtung 50 die erste Hubeinheit 64 und die zweite Hubeinheit 66 aufweist, was im ersten Ausführungsbeispiel nicht notwendig ist.

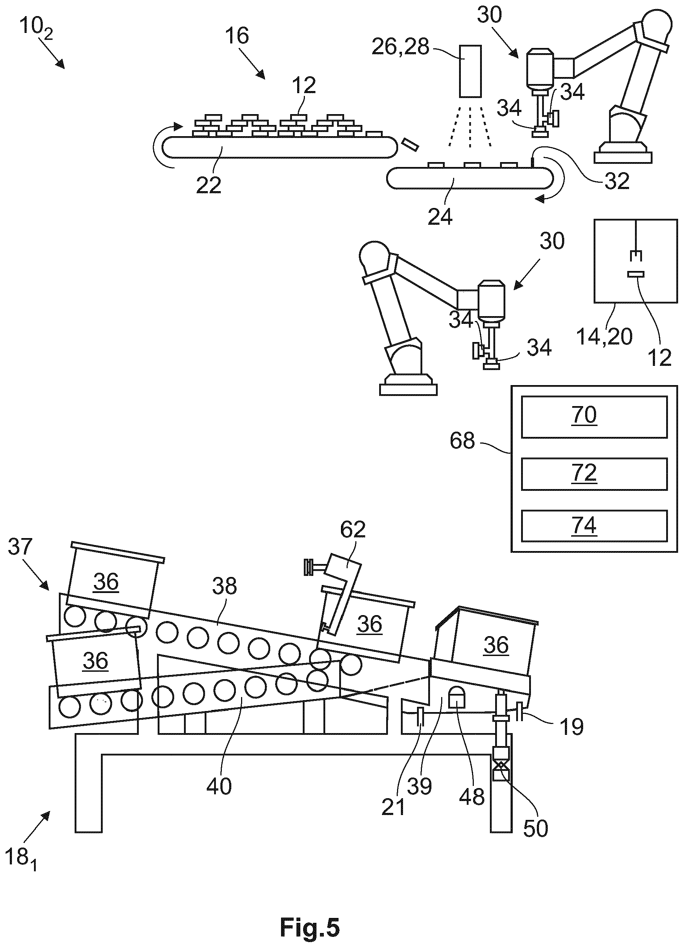

In Figur 5 ist ein zweites Ausführungsbeispiel der Zu- und Abführvorrichtung 10₂ anhand einer prinzipiellen Darstellung gezeigt. Der wesentliche Aufbau der Zu- und Abführvorrichtung 10₂ nach dem zweiten Ausführungsbeispiel entspricht dabei dem Aufbau der Zu- und Abführvorrichtung 10₁ nach dem ersten Ausführungsbeispiel, so dass im Folgenden nur auf die wesentlichen Unterschiede eingegangen wird. Nach erfolgter Bearbeitung und nach erfolgter Entnahme aus der Werkzeugmaschine 14 wird das bearbeitete Werkstück 12 nicht direkt auf den Übergabeabschnitt 39 oder in den dort positionierten Ladungsträger 36 abgelegt, sondern einer Nachbehandlungseinrichtung 68 zugeführt. Im zweiten Ausführungsbeispiel ist hierzu eine weitere Greifeinrichtung 30 vorgesehen, was aber nicht zwingend erforderlich ist. Die Nachbehandlungseinrichtung 68 umfasst im zweiten Ausführungsbeispiel ein Reinigungsbad 70, in welchem das bearbeitete Werkstück 12 gereinigt werden kann, was insbesondere dann von Bedeutung ist, wenn das Werkstück 12 in der Werkzeugmaschine 14 spanend oder schleifend bearbeitet worden ist und Bearbeitungsrückstände entfernt werden müssen. Die Nachbehandlungseinrichtung 68 umfasst weiterhin eine Prüfeinheit 72, mit welcher geprüft werden kann, ob die Bearbeitungsrückstände wie gewünscht entfernt worden sind. Die Prüfeinheit 72 kann beispielsweise eine Kamera umfassen. Die Prüfeinheit 72 kann auch andere Messgeräte wie Waagen umfassen. Ist das Ergebnis der Prüfung negativ, kann das Werkstück 12 von der Greifeinrichtung 30 erneut in das Reinigungsbad 70 überführt werden. Ist das Ergebnis positiv, kann das Werkstück 12 von der Greifeinrichtung 30 zu einer Verpackungsmaschine 74 transportiert werden, wo das Werkstück 12 verpackt wird, beispielsweise in Blisterverpackungen. Nach erfolgter Verpackung übergibt die Greifeinrichtung 30 das verpackte Werkstück 12 an den Ladungsträger 36, der auf dem Übergabeabschnitt 39 angeordnet ist. Der Ladungsträger 36 wird anschließend auf die oben diskutierte Weise entlang des Abtransportabschnitts 40 weitertransportiert.

### Bezugszeichenliste

- 10: Zu- und Abführvorrichtung
- 12: Werkstück
- 14: Werkzeugmaschine
- 16: Zuführ-Fördereinrichtung
- 18: Abführeinheit
- 19: Anschlag

- 20: Richtpresse, Schleifmaschine
- 22: Bunkerband
- 24: Entnahmeband
- 26: Bildverarbeitungseinrichtung
- 28: Kamera

- 30: Greifeinrichtung
- 32: Anschlagfläche
- 34: Greifabschnitt
- 36: Ladungsträger
- 37: Transportbahn
- 38: Zuführabschnitt
- 39: Übergabeabschnitt

- 40: Abtransportabschnitt
- 42: Rollenbahn
- 44: Rollenbahn
- 46: Kugelbahn
- 48: Kugelgelenk

- 50: Hubeinrichtung
- 52: Ladungsträger-Führungseinrichtung
- 54: Wandung
- 56: Vorsprung
- 58: Rundung

- 60: Führungsrolle
- 62: Vereinzelungseinheit
- 64: erste Hubeinheit
- 66: zweite Hubeinheit
- 68: Nachbehandlungseinrichtung
- 70: Reinigungsbad
- 72: Prüfeinheit
- 74: Verpackungsmaschine

- AV: Vertikalachse
- A1: erste Abstand
- A2: zweite Abstand
- B1: Breite Zuführabschnitt
- B2: Breite Abtransportabschnitt
- D1: erste Drehachse
- D2: zweite Drehachse
- L1: Längsachse Zuführabschnitt
- L2: Längsachse Abtransportabschnitt

## Patentansprüche

1. Zu- und Abführvorrichtung (10) zum Zuführen von zu bearbeitenden Werkstücken (12) zu einer Werkzeugmaschine (14) und zum Abführen von in der Werkzeugmaschine (14) bearbeiteten Werkstücken (12) von der Werkzeugmaschine (14), umfassend
- eine Abführeinheit (18) mit einer Transportbahn (37) zum Bewegen der bearbeiteten Werkstücke (12) oder zum Bewegen von Ladungsträgern (36) aufweist, in welche die bearbeiteten Werkstücke (12) einbringbar sind, wobei die Transportbahn (37)
o einen Übergabeabschnitt (39), in welchem die bearbeiteten Werkstücke (12) auf die Transportbahn (37) auflegbar oder in zumindest einen Ladungsträger (36) einbringbar sind und
o einen Abtransportabschnitt (40) aufweist, mit welchem die bearbeiteten Werkstücke (12) oder die beladenen Ladungsträger (36) vom Übergabeabschnitt (39) weg bewegt werden können, wobei
oder Übergabeabschnitt (39) mit einer Hubeinrichtung (50) zwischen einer ersten Stellung, in welcher der Übergabeabschnitt (39) zur Übergabe der bearbeiteten Werkstücke (12) ausgerichtet ist, und einer zweiten Stellung bewegbar ist, in welcher der Übergabeabschnitt (39) zum Beschleunigen und zum Bewegen der bearbeiteten Werkstücke (12) oder der beladenen Ladungsträger (36) zum Abtransportabschnitt (40) hin gegenüber der Horizontalen geneigt ist,
**dadurch gekennzeichnet, dass**
die Zu- und Abführvorrichtung eine Zuführ-Fördereinrichtung aufweist, mit welcher die zu bearbeitenden Werkstücke zu der Werkzeugmaschine gefördert werden können, und dass
- der Übergabeabschnitt (39) eine Kugelbahn (46) aufweist und so gelagert ist, dass beim Bewegen in die zweite Stellung der Ladungsträger (36) oder die bearbeiteten Werkstücke (12) eine Drehbewegung um die Vertikalachse (AV) ausführen, und
- die Abführeinheit (18) eine Übergabeabschnitt-Führungseinheit (21) aufweist, die so mit dem Übergabeabschnitt (39) zusammenwirkt, dass der Übergabeabschnitt (39) beim Bewegen von der ersten Stellung in die zweite Stellung zunächst um eine erste Drehachse (D1) und anschließend um eine zweite Drehachse (D2) gedreht wird.

2. Zu- und Abführvorrichtung (10) nach Anspruch 1,
**dadurch gekennzeichnet, dass** der Übergabeabschnitt (39) mittels eines Kugelgelenks (48) gelagert ist.

3. Zu- und Abführvorrichtung (10) nach einem der Ansprüche 1 oder 2,
**dadurch gekennzeichnet, dass** die Abführeinheit (18) eine Ladungsträger-Führungseinrichtung (52) aufweist, die derart mit den Ladungsträgern (36) zusammenwirkt, dass die Ladungsträger (36) bei der Drehbewegung um 90° um die Vertikalachse (AV) gedreht werden.

4. Zu- und Abführvorrichtung (10) nach einem der vorherigen Ansprüche,
**dadurch gekennzeichnet, dass** die Hubeinrichtung (50) eine erste Hubeinheit und eine zweite Hubeinheit umfasst, welche beabstandet voneinander am Übergabeabschnitt (39) angreifen.

5. Zu- und Abführvorrichtung (10) nach einem der vorherigen Ansprüche,
**dadurch gekennzeichnet, dass** die Abführeinheit (18) einen Zuführabschnitt (38) zum Zuführen der Ladungsträger (36) zum Übergabeabschnitt (39) aufweist.

6. Zu- und Abführvorrichtung (10) nach Anspruch 5,
**dadurch gekennzeichnet, dass** der Zuführabschnitt (38) eine Rollenbahn (42) umfasst und gegenüber der Horizontalen zum Übergabeabschnitt (39) hin geneigt ist.

7. Zu- und Abführvorrichtung (10) nach Anspruch 6,
**dadurch gekennzeichnet, dass** die Zu- und Abführvorrichtung (10) eine Vereinzelungseinheit (62) zum Vereinzeln der Ladungsträger (36) auf dem Zuführabschnitt (38) aufweist.

8. Zu- und Abführvorrichtung (10) nach einem der Ansprüche 5 bis 7,
**dadurch gekennzeichnet, dass** der Zuführabschnitt (38) und der Abtransportabschnitt (40) parallel zueinander verlaufen.

9. Zu- und Abführvorrichtung (10) nach einem der vorherigen Ansprüche,
**dadurch gekennzeichnet, dass** der Abtransportabschnitt (40) eine Rollenbahn (44) umfasst und gegenüber der Horizontalen vom Übergabeabschnitt (39) weg geneigt ist.

10. Zu- und Abführvorrichtung (10) nach einem der vorherigen Ansprüche,
**dadurch gekennzeichnet, dass** die Zu- und Abführvorrichtung (10) eine Greifeinrichtung (30) zum Entnehmen der zu bearbeitenden Werkstücke (12) vom der Zuführ-Fördereinrichtung (16), zum Zuführen der Zuführ-Fördereinrichtung (16) entnommenen zu bearbeitenden Werkstücke (12) zur Werkzeugmaschine (14) und zum Zuführen der in der Werkzeugmaschine (14) bearbeiteten Werkstücke (12) zum Übergabeabschnitt (39) aufweist.

11. Zu- und Abführvorrichtung (10) nach Anspruch 10,
**dadurch gekennzeichnet, dass** die Greifeinrichtung (30) derart eingerichtet ist, dass sie die in der Werkzeugmaschine (14) bearbeiteten Werkstücke (12) einer Nachbehandlungseinrichtung (68) zuführt und nach erfolgter Nachbehandlung die nachbehandelten Werkstücke (12) dem Übergabeabschnitt (39) zuführt.

12. Zu- und Abführvorrichtung (10) nach einem der vorherigen Ansprüche,
**dadurch gekennzeichnet, dass** die Zuführ-Fördereinrichtung (16) ein Bunkerband (22), auf welches die zu bearbeitenden Werkstücke (12) aufgelegt werden, und ein Entnahmeband (24), von dem die zu bearbeitenden Werkstücke (12) entnommen werden, umfasst.

13. Zu- und Abführvorrichtung (10) nach Anspruch 12,
**dadurch gekennzeichnet, dass** die Zu- und Abführvorrichtung (10) eine Bildverarbeitungseinrichtung (26) aufweist, mit welcher die auf dem Entnahmeband (24) angeordneten zu bearbeitenden Werkstücke (12) hinsichtlich ihrer Position und Ausrichtung erfassbar sind.

14. Zu- und Abführvorrichtung (10) nach einem der Ansprüche 12 oder 13,
**dadurch gekennzeichnet, dass** die Zuführ-Fördereinrichtung (16) eine Anschlagfläche (32) aufweist, gegen den die auf dem Entnahmeband (24) angeordneten zu bearbeitenden Werkstücke (12) anschlagen.

15. Abführeinheit (18) mit einer Transportbahn (37) zum Bewegen von bearbeiteten Werkstücken (12) oder zum Bewegen von Ladungsträgern (36), in welche die bearbeiteten Werkstücke (12) einbringbar sind, wobei die Transportbahn (37)
- einen Übergabeabschnitt (39), in welchem die bearbeiteten Werkstücke (12) auf die Transportbahn (37) auflegbar oder in zumindest einen Ladungsträger (36) einbringbar sind und
- einen Abtransportabschnitt (40) aufweist, mit welchem die bearbeiteten Werkstücke (12) oder die beladenen Ladungsträger (36) vom Übergabeabschnitt (39) weg bewegt werden können, wobei
- der Übergabeabschnitt (39) mit einer Hubeinrichtung (50) zwischen einer ersten Stellung, in welcher der Übergabeabschnitt (39) zur Übergabe der bearbeiteten Werkstücke (12) ausgerichtet ist, und einer zweiten Stellung bewegbar ist, in welcher der Übergabeabschnitt (39) zum Beschleunigen und zum Bewegen der bearbeiteten Werkstücke (12) oder der beladenen Ladungsträger (36) zum Abtransportabschnitt (40) hin gegenüber der Horizontalen geneigt ist,
**dadurch gekennzeichnet, dass**
- der Übergabeabschnitt (39) mittels eines Kugelgelenks (48) gelagert ist,
- der Übergabeabschnitt (39) eine Kugelbahn (46) aufweist und so gelagert ist, dass beim Bewegen in die zweite Stellung der Ladungsträger (36) oder die bearbeiteten Werkstücke (12) eine Drehbewegung um die Vertikalachse (AV) ausführen, wobei die Abführeinheit (18) eine Übergabeabschnitt-Führungseinheit (21) aufweist, die so mit dem Übergabeabschnitt (39) zusammenwirkt, dass der Übergabeabschnitt (39) beim Bewegen von der ersten Stellung in die zweite Stellung zunächst um eine erste Drehachse (A1) und anschließend um eine zweite Drehachse (A2) gedreht wird.

16. Verfahren zum Betreiben einer Zu- und Abführvorrichtung (10) nach Anspruch 13, umfassend folgende Schritte:
- Aufbringen einer Vielzahl von zu bearbeitenden Werkstücken (12) auf das Bunkerband (22),
- Überführen eines Teils der auf dem Bunkerband (22) angeordneten Werkstücke (12) auf das Entnahmeband (24),
- Erfassen der auf dem Entnahmeband (24) angeordneten Werkstücke (12) hinsichtlich ihrer Position und Ausrichtung mit der Bildverarbeitungseinrichtung (26),
- Übertragen der Position und Ausrichtung der auf dem Entnahmeband (24) angeordneten Werkstücke (12) an die Greifeinrichtung (30),
- Entnehmen eines der auf dem Entnahmeband (24) angeordneten Werkstücke (12) mit der Greifeinrichtung (30) und Zuführen des vom Entnahmeband (24) entnommenen Werkstücks (12) zur Werkzeugmaschine (14),
- Bearbeiten des Werkstücks (12) in der Werkzeugmaschine (14),
- Auflegen des in der Werkzeugmaschine (14) bearbeiteten Werkstücks (12) auf die Transportbahn (37) oder Einbringen des in der Werkzeugmaschine (14) bearbeiteten Werkstücks (12) in den Ladungsträger (36) im Übergabeabschnitt (39) mittels der Greifeinrichtung (30), und
- Bewegen des bearbeiteten Werkstücks (12) oder des beladenen Ladungsträgers (36) vom Übergabeabschnitt (39) weg mittels des Abtransportabschnitts (40).

17. Verfahren nach Anspruch 16, umfassend folgende Schritte:
- Bewegen des Übergabeabschnitts (39) in eine erste Stellung, in welcher der Übergabeabschnitt (39) zur Übergabe der bearbeiteten Werkstücke (12) ausgerichtet ist, mittels der Hubeinrichtung (50)
- Auflegen des in der Werkzeugmaschine (14) bearbeiteten Werkstücks (12) auf die Transportbahn (37) oder Einbringen des in der Werkzeugmaschine (14) bearbeiteten Werkstücks (12) in den Ladungsträger (36) im Übergabeabschnitt (39) mittels der Greifeinrichtung (30) in der ersten Stellung, und
- Bewegen des Übergabeabschnitts (39) in eine zweite Stellung mittels der Hubeinrichtung (50), in welcher der Übergabeabschnitt (39) gegenüber der Horizontalen geneigt ist, so dass das das bearbeitete Werkstück (12) oder der beladene Ladungsträger (36) beschleunigt und zum Abtransportabschnitt (40) hin bewegt wird.

18. Verfahren nach einem der Ansprüche 16 oder 17,
**dadurch gekennzeichnet, dass** nach dem Schritt des Bearbeitens des Werkstücks (12) in der Werkzeugmaschine (14) das bearbeitete Werkstück (12) mittels der Greifeinrichtung (30) einer Nachbehandlungseinrichtung (68) zugeführt und nach erfolgter Nachbehandlung die nachbehandelten Werkstücke (12) dem Übergabeabschnitt (39) zugeführt werden.

## Claims

1. Delivery and removal apparatus (10) for the delivering of workpieces (12) intended for machining to a machine tool (14) and for the removing of workpieces (12) machined in the machine tool (14) from the machine tool (14), comprising
- a removal unit (18) having a conveyor track (37) for moving the machined workpieces (12) or for moving charge carriers (36), into which the machined workpieces (12) can be deposited, wherein the conveyor track (37) comprises
o a transfer section (39), in which the machined workpieces (12) can be placed onto the conveyor track (37) or deposited into at least one charge carrier (36) and
o a transport section (40), by means of which the machined workpieces (12) or the loaded charge carriers (36) can be moved away from the transfer section (39), wherein
o the transfer section (39) can be moved by means of a hoisting mechanism (50) between a first position, in which the transfer section (39) is oriented to transfer the machined workpieces (12), and a second position, in which the transfer section (39) is inclined to the horizontal in order to accelerate and move the processed workpieces (12) or the loaded charge carriers (36) toward the transport section (40),
**characterized in that**
- the delivery and removal apparatus (10) comprises a delivery conveyor mechanism (16), by means of which the workpieces (12) intended for machining can be transported to the machine tool (14), and **in that**
- the transfer section (39) comprises a ball track (46) and is mounted such that, when moved into the second position, the charge carrier (36) or the machined workpiece (12) carries out a rotational movement around the vertical axis (AV), and
- the removal unit (18) comprises a transfer section guide unit (21), which interacts with the transfer section (39) such that the transfer section (39), when moved from the first position into the second position, is first rotated around a first axis of rotation (D1) and then around a second axis of rotation (D2).

2. Delivery and removal apparatus (10) in accordance with claim 1,
**characterized in that** the transfer section (39) is mounted by means of a ball joint (48).

3. Delivery and removal apparatus (10) in accordance with either of claims 1 or 2, **characterized in that** the removal unit (18) comprises a charge carrier guide mechanism (52), which interacts with the charge carriers (36) such that the charge carriers (36) are rotated by 90° around the vertical axis (AV) during the rotational movement.

4. Delivery and removal apparatus (10) in accordance with any of the preceding claims, **characterized in that** the hoisting mechanism (50) comprises a first hoisting unit and a second hoisting unit which engage at a distance to each other on the transfer section (39).

5. Delivery and removal apparatus (10) in accordance with any of the preceding claims, **characterized in that** the removal unit (18) comprises a delivery section (38) for delivering the charge carriers (36) to the transfer section (39).

6. Delivery and removal apparatus (10) in accordance with claim 5,
**characterized in that** the delivery section (38) includes a roller track (42) and **in that** it is inclined to the transfer section (39) in respect to the horizontal.

7. Delivery and removal apparatus (10) in accordance with claim 6,
**characterized in that** the delivery and removal apparatus (10) comprises a separation unit (62) for separating the charge carriers (36) on the delivery section (38).

8. Delivery and removal apparatus (10) in accordance with any of claims 5 to 7, **characterized in that** the delivery section (38) and the transport section (40) extend parallel to each other.

9. Delivery and removal apparatus (10) in accordance with any of the preceding claims, **characterized in that** the transport section (40) includes a roller track (44) and **in that** it is inclined away from the transfer section (39) in respect to the horizontal.

10. Delivery and removal apparatus (10) in accordance with any of the preceding claims, **characterized in that** the delivery and removal apparatus (10) comprises a gripping mechanism (30) for removing the workpieces (12) intended for machining from the delivery conveyor mechanism (16), for delivering the workpieces (12) intended for machining and removed from the delivery conveyor mechanism (16) to the machine tool (14) and for delivering the workpieces (12) machined with the machine tool (14) to the transfer section (39).

11. Delivery and removal apparatus (10) in accordance with claim 10,
**characterized in that** the gripping mechanism (30) is configured to deliver the workpieces (12) machined with the machine tool (14) to a post-machining unit (68) and, after the post-machining is completed, to deliver the post-machined workpieces (12) to the transfer section (39).

12. Delivery and removal apparatus (10) in accordance with any of the preceding claims, **characterized in that** the delivery conveyor mechanism (16) includes a bunker conveyor (22), on which the workpieces (12) intended for machining are placed, and a removal conveyor (24), from which the workpieces (12) intended for machining are taken.

13. Delivery and removal apparatus (10) in accordance with claim 12,
**characterized in that** the delivery and removal apparatus (10) comprises an image processing system (26), with which the workpieces (12) intended for machining which are arranged on the removal conveyor (24) can be detected with regard to their position and orientation.

14. Delivery and removal apparatus (10) in accordance with either of claims 12 or 13, **characterized in that** the delivery conveyor mechanism (16) comprises an abutment surface (32), against which the workpieces (12) intended for machining which are arranged on the removal conveyor (24) come to rest.

15. Removal unit (18) having a conveyor track (37) for moving machined workpieces (12) or for moving charge carriers (36), into which the machined workpieces (12) can be placed, wherein the conveyor track (37) comprises
- a transfer section (39), in which the machined workpieces (12) can be placed on the conveyor track (37) or can be deposited in at least one charge carrier (36) and
- a transport section (40), by means of which the machined workpieces (12) or the loaded charge carriers (36) can be moved away from the transfer section (39), wherein
- the transfer section (39) is moveable by means of a hoisting mechanism (50) between a first position, in which the transfer section (39) is oriented to transfer the machined workpieces (12), and a second position, in which the transfer section (39) is inclined toward the horizontal in order to accelerate and move the machined workpieces (12) or the loaded charge carriers (36) to the transport section 40,
**characterized in that**
- the transfer section (39) is mounted by means of a ball joint (48),
- the transfer section (39) comprises a ball track (46) and is mounted such that, when moved into the second position, the charge carrier (36) or the machined workpieces (12) carries out a rotational movement around the vertical axis (AV), wherein the removal unit (18) comprises a transfer section guide unit (21), which interacts with the transfer section (39) such that the transfer section (39), when moved from the first position into the second position, is first rotated around a first axis of rotation (A1) and then around a second axis of rotation (A2).

16. Method for operating a delivery and removal apparatus (10) in accordance with claim 13, comprising the following steps:
- depositing numerous workpieces (12) intended for machining onto the bunker conveyor (22),
- transferring a portion of the workpieces (12) arranged on the bunker conveyor (22) to the removal conveyor (24),
- detecting the workpieces (12) arranged on the removal conveyor (24) with regard to their position and orientation with the image processing system (26),
- transferring the position and orientation of the workpieces (12) arranged on the removal conveyor (24) to the gripping mechanism (30),
- removing one of the workpieces (12) arranged on the removal conveyor (24) with the gripping mechanism (30) and delivering the workpiece (12) removed from the removal conveyor (24) to the machine tool (14),
- machining the workpiece (12) with the machine tool (14),
- placing the workpiece (12) machined with the machine tool (14) onto the transport conveyor (37) or depositing the workpiece (12) machined with the machine tool (14) into the charge carrier (36) in the transfer section (39) by means of the gripping mechanism (30), and
- moving the machined workpiece (12) or the loaded charge carrier (36) away from the transfer section (39) by means of the transport section (40).

17. Method in accordance with claim 16, comprising the following steps:
- moving the transfer section (39) into a first position, in which the transfer section (39) is oriented to transfer the machined workpieces (12) by means of the hoisting mechanism (50),
- placing the workpiece (12) machined with the machine tool (14) onto the transport conveyor (37) or depositing the workpieces (12) machined with the machine tool (14) into the charge carrier (36) in the transfer section (39) by means of the gripping mechanism (30) in the first position, and
- moving the transfer section (39), by means of the hoisting mechanism (50), into a second position, in which the transfer section (39) is inclined with regard to the horizontal such that the machined workpiece (12) or the loaded charge carrier (36) is accelerated and moved to the transport section (40).

18. Method in accordance with either of claims 16 or 17,
**characterized in that**, after the step of machining the workpiece (12) with the machine tool (14), the machined workpiece (12) is delivered, by means of the gripping mechanism (30) to a post-machining unit (68) and, after the post-machining is completed, the post-machined workpiece (12) is delivered to the transfer section (39).

## Revendications

1. Dispositif d'alimentation et d'évacuation (10) pour alimenter une machine-outil (14) avec des pièces à usiner (12) et pour évacuer de la machine-outil (14) les pièces (12) qui ont été usinées par la machine-outil (14), comprenant :
- une unité d'évacuation (18) avec un convoyeur (37) pour déplacer les pièces usinées (12) ou pour déplacer des porte-charges (36) qui peuvent recevoir les pièces usinées (12),
la bande transporteuse (37) comportant :
* un segment de transfert (39) où les pièces usinées (12) sont placées sur le convoyeur (37) ou sont mises dans au moins un porte-charges (36), et
- un segment de transport de sortie (40) qui enlève les pièces usinées (12) ou les porte-charges (36), chargés, du segment de transfert (39),
* le segment de transfert (39) étant équipé d'une installation de levage (50) entre une première position dans laquelle le segment de transfert (39) est orienté pour transférer les pièces usinées (12) et une seconde position dans laquelle le segment de transfert (39) est incliné par rapport à la direction horizontale pour accélérer et déplacer les pièces usinées (12) ou le porte-charges (36) chargé vers le segment de transport de sortie (40),
dispositif d'alimentation et d'évacuation
**caractérisé en ce qu'**il comporte
une installation de transfert d'alimentation pour transférer les pièces à usiner vers la machine-outil, et
- le segment de transfert (39) comporte un convoyeur à billes (46) et il est monté pour que, mis dans la seconde position, le porte-charges (36) ou les pièces usinées (12) effectuent un mouvement de rotation autour de l'axe vertical (AV), et
- l'unité d'évacuation (18) a une unité de guidage à segment de transfert (21) qui coopère avec le segment de transfert (39) pour que le segment de transfert (39), déplacé de sa première position dans sa seconde position, tourne d'abord autour d'un premier axe de rotation (D1) et ensuite autour d'un second axe de rotation (D2).

2. Dispositif d'alimentation et d'évacuation (10) selon la revendication 1,
**caractérisé en ce que**
le segment de transfert (39) est monté sur une articulation à rotule (48).

3. Dispositif d'alimentation et d'évacuation (10) selon l'une des revendications 1 ou 2,
**caractérisé en ce que**
l'unité d'évacuation (18) a une installation de guidage de porte-charges (52) qui coopère avec les porte-charges (36) pour que les porte-charges (36) pivotent autour de l'axe vertical (AV) par un mouvement de 90°.

4. Dispositif d'alimentation et d'évacuation (10) selon l'une des revendications précédentes,
**caractérisé en ce que**
l'installation de levage (50) a une première unité de levage et une seconde unité de levage, écartées l'une de l'autre sur le segment de transfert (39).

5. Dispositif d'alimentation et d'évacuation (10) selon l'une des revendications précédentes,
**caractérisé en ce que**
l'unité d'évacuation (18) a un segment d'alimentation (38) pour fournir les porte-charges (36) au segment de transfert (39).

6. Dispositif d'alimentation et d'évacuation (10) selon la revendication 5,
**caractérisé en ce que**
le segment d'alimentation (38) comprend un chemin à billes (42) et il est incliné par rapport à la direction horizontale vers le segment de transfert (39).

7. Dispositif d'alimentation et d'évacuation (10) selon la revendication 6,
**caractérisé en ce que**
le dispositif d'alimentation et d'évacuation (10) a une unité de séparation (62) pour séparer les porte-charges (36) sur le segment d'alimentation (38).

8. Dispositif d'alimentation et d'évacuation (10) selon l'une des revendications 5 à 7,
**caractérisé en ce que**
l'unité d'alimentation (38) et le segment de transport de sortie (40) sont parallèles.

9. Dispositif d'alimentation et d'évacuation (10) selon l'une des revendications précédentes,
**caractérisé en ce que**
le segment de transport de sortie (40) comprend un convoyeur à rouleaux (44) et il est incliné par rapport à la direction horizontale en s'écartant du segment de transfert (39).

10. Dispositif d'alimentation et d'évacuation (10) selon l'une des revendications précédentes,
**caractérisé en ce que**
le dispositif d'alimentation et d'évacuation (10) comprend une installation de préhension (30) pour prendre les pièces à usiner (12) de l'installation de transfert d'alimentation (16), pour fournir les pièces à usiner (12) prélevées de l'installation de transfert d'alimentation (16) à une machine-outil (14) et alimenter le segment de transfert (39) avec les pièces (12) usinées par la machine-outil (14).

11. Dispositif d'alimentation et d'évacuation (10) selon la revendication 10,
**caractérisé en ce que**
l'installation de préhension (30) est conçue pour fournir les pièces (12) usinées par la machine-outil (14) à une installation de post-traitement (68) et après le post-traitement, fournir les pièces post-traitées (12) au segment de transfert (39).

12. Dispositif d'alimentation et d'évacuation (10) selon l'une des revendications précédentes,
**caractérisé en ce que**
l'installation de transfert d'alimentation (16) a un convoyeur à trémie (22) recevant les pièces à usiner (12) et une bande de prélèvement (24) sur laquelle on prend les pièces à usiner (12).

13. Dispositif d'alimentation et d'évacuation (10) selon la revendication 12,
**caractérisé en ce que**
le dispositif d'alimentation et d'évacuation (10) comprend une installation de traitement d'images (26) pour saisir la position et l'orientation des pièces (12) à usiner placées sur la bande de prélèvement (24).

14. Dispositif d'alimentation et d'évacuation (10) selon l'une des revendications 12 ou 13,
**caractérisé en ce que**
l'installation de transfert d'alimentation (16) a une surface de butée (32) contre laquelle butent les pièces (12) à usiner placées sur la bande de prélèvement (24).

15. Unité d'évacuation (18) comportant un convoyeur (37) pour déplacer les pièces usinées (12) ou pour déplacer des porte-charges (36) recevant les pièces à usiner (12),
le convoyeur (37) comporte
- un segment de transfert (39) recevant les pièces à usiner (12) sur le convoyeur (37) ou sont mises dans au moins un porte-charges (36) et,
- un segment de transport de sortie (40) avec lequel on peut évacuer du segment de transfert (39) les pièces usinées (12) ou les porte-charges (36), le segment de transfert (39) pouvant être déplacé par une installation de levage (50) entre une première position dans laquelle le segment de transfert (39) est orienté pour transférer les pièces usinées (12) et une seconde position dans laquelle le segment de transfert (39) est incliné par rapport à la direction horizontale pour accélérer et déplacer les pièces (12), usinées ou les porte-charges (36) vers le segment de transport de sortie (40), unité **caractérisée en ce que**
- le segment de transfert (39) est muni d'une articulation à rotule (48),
- le segment de transfert (39) comporte un convoyeur à billes (46) et il est monté pour que par le déplacement dans la seconde position, le porte-charges (36) ou les pièces (12) usinées, effectuent un mouvement de rotation autour de l'axe vertical (AV), l'unité d'évacuation (18) ayant une unité de guidage de segment de transfert (21) qui coopère avec le segment de transfert (39) pour que le segment de transfert (39), lors du mouvement entre la première position et la seconde position, tourne tout d'abord autour d'un premier axe de rotation (A1) et ensuite autour d'un second axe de rotation (A2).

16. Procédé de gestion d'un dispositif d'alimentation et d'évacuation (10) selon la revendication 13, comprenant les étapes suivantes consistant à :
- mettre un ensemble de pièces (12) à usiner sur un convoyeur à trémie (22),
- transférer une partie des pièces (12) du convoyeur à trémie (22) sur la bande de prélèvement (24),
- saisir la position et l'orientation des pièces (12) placées sur la bande de prélèvement (24) avec une installation de traitement d'images (26),
- transmettre la position et l'orientation des pièces (12) placées sur la bande de prélèvement (24) à l'installation de préhension (30),
- prendre l'une des pièces (12) placée sur la bande de prélèvement (24) avec l'installation de préhension (30) et fournir la pièce (12) prise sur la bande de prélèvement (24) à la machine-outil (14),
- usiner la pièce (12) dans la machine-outil (14),
- placer la pièce (12) usinée par la machine-outil (14) sur le convoyeur (37) ou mettre la pièce (12) usinée par la machine-outil (14) dans le porte-charges (36), dans le segment de transfert (39), avec l'installation de préhension (30), et
- déplacer la pièce (12) usinée ou le porte-charges (36) chargé, du segment de transfert (39) pour l'enlever avec le segment de transport de sortie (40).

17. Procédé selon la revendication 16, comprenant les étapes suivantes consistant à :
- déplacer le segment de transfert (39) dans une première position dans laquelle le segment de transfert (39) est orienté pour transférer les pièces (12) usinées à l'aide de l'installation de levage (50),
- placer la pièce (12) usinée par la machine-outil (14) sur le convoyeur (37) ou mettre la pièce (12) usinée par la machine-outil (14) dans le porte-charges (36), dans le segment de transfert (39), à l'aide de l'installation de préhension (30) dans la première position, et
- déplacer le segment de transfert (39) dans une seconde position à l'aide de l'installation de levage (50) dans laquelle le segment de transfert (39) est incliné par rapport à la direction horizontale pour que la pièce (12) usinée ou le porte-charges (36) chargé soit accéléré et déplacé vers le segment de transport de sortie (40).

18. Dispositif d'alimentation et d'évacuation selon l'une des revendications 16 ou 17,
**caractérisé en ce que**
après l'étape d'usinage de la pièce (12) dans la machine-outil (14), la pièce (12), usinée, est fournie par l'installation de préhension (30) à une installation de post-traitement (68) et après le post-traitement, la pièce (12), post-traitée est fournie au segment de transfert (39).
